# EUROPÄISCHE PATENTANMELDUNG

(11) **EP 1 521 072 A1**
(43) Veröffentlichungstag der Anmeldung: **06.04.2005**
(21) Anmeldenummer: 04450183.1
(22) Anmeldetag: 01.10.2004
(51) Int. Cl.: G01L 5/20, E01B 35/12, B61L 1/06, B61L 23/04

(54) **Verfahren zur Erfassung von Kräften von elastischen Verformungen zumindest einer Schiene und eines Oberbaues**

(30) Priorität: 02.10.2003 AT 15632003
(71) Anmelder: Österreichische Bundesbahnen, 1010 Wien (AT); Hottinger Baldwin Messtechnik GmbH, 1230 Wien (AT); Dr. Mittermayer & Partner KEG, 1040 Wien (AT); Ingenieusgesellschaft für Angewandte Technologie mbH, 82319 Starnberg (DE)
(72) Erfinder: Stephanides, Johannes, 1200 Wien (AT); Weilinger, Walter, 1060 Wien (AT); Mittermayer, Paul, 1100 Wien (AT); Meinke, Peter, 82319 Starnberg (DE)
(74) Vertreter: Widtmann, Georg, Dipl.-Ing. Dr. techn.

(57) **Zusammenfassung**

Verfahren zur Erfassung von Kräften für elastische Verformungen von einer Schiene (2) und einer Verformung eines Oberbaues in einer Messstrecke, deren Länge in Fahrtrichtung gesehen zumindest einem Umfang eines größten Schienenrades eines Wagens, Triebelementes od. dgl. entspricht, mit einer Vielzahl von elektrischen Sensoren (12, 13, 15), die für eine Messgröße in Fahrtrichtung gesehen hintereinander angeordnet sind, welche elektrische Signale über zumindest einen Analog-/Digitalwandler (A/D) an zumindest eine Datenverarbeitungsanlage (DV) übermitteln, in dieser gespeichert und verarbeitet werden, wobei zusätzlich Signale von Dehnmessstreifen (13) in der Messstrecke, die an einem Schienenkopf (5) der Schiene (2), insbesondere entlang der Fahrtrichtung, angeordnet sind, über einen Analog/Digitalwandler (A/D) an die zumindest eine Datenverarbeitungsanlage (DV) weitergeleitet und verarbeitet werden.

## Beschreibung

Die Erfindung bezieht sich auf ein Verfahren zur Erfassung von Kräften für elastische Verformungen von zumindest einer Schiene eines schienengeleiteten Verkehrs und einer, insbesondere reversiblen, Verformung eines Oberbaues, insbesondere mit Schwellen, Tragplatten od. dgl.

Unter der Voraussetzung, dass der Unter- und Oberbau einer Gleisstrecke im Wesentlichen stationär angeordnet ist, also keine Verrutschungen od. dgl. stattfinden, kann der Unter- und Oberbau eines Gleises im Wesentlichen als ortsfest bezüglich stationärer Kräfte angesehen werden. Gleise unterliegen jedoch dynamischen Beanspruchungen bei Durchfahrt eines Zuges, Lokomotive od. dgl. Die Beanspruchung ist unterschiedlich bei geraden Strecken gegenüber Kurven, wobei in Kurven zwischen der Innenschiene und der Außenschiene zu unterscheiden ist.

Gleise unterliegen verschiedensten Veränderungen. Die Schienen werden sowohl in vertikaler als auch horizontaler Richtung abgenutzt und die erforderliche Einfederung von Schwellen oder Tragplatten unterliegen einer Alterung und damit auch einer Änderung.

Ein rollendes Material, sei es ein einzelner Wagen, eine Folge von Wagen, z. B. Personenwagen, Güterwagen mit einer Lokomotive oder eine Einheit von Wagen mit einem Triebwagen, bedingen eine, insbesondere zyklische, Beanspruchung des Ober- und Unterbaues.

Kräfte, welche vom rollenden Material auf den Ober- und Unterbau ausgeübt werden, werden über die Räder des rollenden Materials auf die Schienen und von diesen weiter übertragen. Werden die Schienen im Wesentlichen als starr betrachtet, so kann die Krafteinbringung über ein einzelnes Schienenrad einfach ermittelt werden.

In einer Veröffentlichung der Deutschen Bahn (Glaser's Annalen 125 (2001), 12. Dezember, Seiten 551 ff) werden ein Verfahren und eine Vorrichtung zur Bestimmung von Kräften an Schienen beschrieben. Es sind hierbei Dehnmessstreifen am Schienenfuß und Schienensteg vorgesehen, welche die elastischen Deformationen der Schienen aufnehmen. Die Messwerte werden an eine Datenverarbeitungsanlage weitergegeben und mit einem oberen Grenzwert verglichen. Bei Überschreitung des oberen Grenzwertes erfolgt eine Weitergabe an eine zentrale Erfassungsstelle. Weiters wird die Belastung der Schiene durch das Rad in vertikaler Richtung angezeigt und bei Nichterfüllen eines Grenzwertes als Gefahr für eine spätere Entgleisung angezeigt.

In der DE 44 39 342 A1 wird eine Schaltanordnung zur Ermittlung unrunder Räder von Eisenbahnfahrzeugen beschrieben. Unrunde Räder von rollendem Material stellen eine besondere Beanspruchung des Ober- und Unterbaues von Gleisen dar. Bei lösbaren und unlösbaren Verbindungen von Schienen mit dem Oberbau liegen dieselben in der Regel nicht durchlaufend auf dem Unterbau auf, sondern in Auflagebereichen, die zueinander in Abstand sind. Damit ist die Krafteinleitung des rollenden Materials über ein Rad lediglich von einem Bereich zum anderen Bereich gegeben. Bei dieser Offenlegungsschrift wird die Einleitung der Kraft von den Schienen in ein Schotterbett entlang von zumindest vier Schwellen ermittelt, wobei die Deformation des Schienenfußes in Schienenlängsrichtung als auch Schienenquerrichtung bestimmt wird. Zusätzlich werden die Kräfte des Schienenrades auf die Schiene als auch die Schubkräfte an den Enden der Messstrecke ermittelt. Die so genannte Radaufstandskraft Q setzt sich aus einer statischen Kraft, ausgeübt bei stehendem, rollendem Material und einem Zusatz von einer dynamischen Kraft, die zusätzlich bei bewegtem, rollendem Material ausgeübt wird, zusammen. Die zusätzlichen dynamischen Beanspruchungen sind durch Unrundheit der Schienenräder bedingt. Gleichzeitig werden die Kräfte, welche von der Schwelle aufgenommen werden, als auch die Schubkräfte auf den Schwellen in der Messstelle berücksichtigt.

Bei einem derartigen System findet nicht Berücksichtigung, dass die Messstrecke nicht für sich alleine betrachtet werden kann, sondern einen Teil eines Gesamtsystems darstellt, wobei insbesondere die Schienen für die Weiterleitung von Kräften verantwortlich sind und dieselben Schwingungen sowohl in vertikaler als auch horizontaler Richtung unterliegen, wobei Schwingungsknoten jeweils an den Befestigungen an Schwellen oder Betonplatten vorliegen.

Die Aufgabe der vorliegenden Erfindung besteht darin, ein Verfahren zur Messung und Verarbeitung der Messdaten von Kräften zu schaffen, das erlaubt, die Gesamtheit von Kräften, die in einer Messstrecke einwirken, zu berücksichtigen. Hierbei muss bedacht werden, dass in der Messstrecke nicht nur Kräfte zu berücksichtigen sind, die innerhalb der Messstrecke, beispielsweise über ein Schienenrad, eingebracht werden, sondern sehr wohl auch Kräfte, die außerhalb der Messstrecke auf die Schiene, Oberbau und Unterbau einwirken und zu elastischen Verformungen der Schiene führen. Weiters muss berücksichtigt werden, dass Schienen Schwingungen unterliegen, die sowohl vertikale als auch horizontale Komponenten beinhalten und Schwingungsknoten bei den Befestigungen der Schienen sowohl auf den Schwellen als auch den Tragplatten vorliegen.

Das erfindungsgemäße Verfahren zur Erfassung von Kräften für elastische Verformungen von zumindest einer Schiene eines schienengeleiteten Verkehrs, und einer, insbesondere reversiblen, Verformung eines Oberbaues, insbesondere mit Schwellen, Tragplatten od. dgl. mit Schotteroberbau und/oder schotterlosem Oberbau, in zumindest einer Messstrecke, deren Länge in Fahrtrichtung gesehen zumindest einem Umfang eines größten Schienenrades eines Elementes, z. B. Wagen, Triebelement od. dgl., entspricht, mit einer Vielzahl von elektrischen Sensoren, die für eine Messgröße in Fahrtrichtung gesehen hintereinander angeordnet sind, z. B. Dehnmessstreifen an einem Schienenfuß und einem Schienensteg der Schiene, welche elektrische Signale über zumindest einen Analog-/Digitalwandler an zumindest eine Datenverarbeitungsanlage übermitteln, in dieser gespeichert, verarbeitet, Kraftabweichungen und damit Formabweichungen von Schienenrädern, und von dieser die Überschreitung der Kräfte eines Grenzwertes angezeigt werden, besteht im Wesentlichen darin, dass zusätzlich Signale von Dehnmessstreifen in der Messstrecke, die an einem Schienenkopf der Schiene, insbesondere entlang der Fahrtrichtung, angeordnet sind, über einen Analog-/Digitalwandler an die zumindest eine Datenverarbeitungsanlage weitergeleitet und verarbeitet werden, und Signale von Sensoren für im Wesentlichen horizontale Kräfte, ausgeübt an der Schiene, an die zumindest eine Datenverarbeitungsanlage über einen Analog-/Digitalwandler weitergeleitet und die Daten verarbeitet werden.

Ein Verfahren zur Ermittlung von Kräften, die auf einen Gleisoberbau ausgeübt werden, bestehen im Wesentlichen in zwei verschiedenen Verfahren. Ein Verfahren, bei dem die Messsysteme im rollenden Material angeordnet sind und ein anderes Verfahren, bei dem die Messsysteme an einer stationären Messstrecke vorgesehen sind. Die stationäre Messstrecke hat den Vorteil, dass eine geringere Anzahl von Sensoren vorgesehen sein muß und zusätzlich die Datenübertragung besonders einfach und sicher gestaltet werden kann. Das rollende Material soll sowohl bei Schotteroberbau als auch schotterlosem Oberbau den gleichen Beanspruchungen unterliegen, wobei dies für die unterschiedlichsten Ausgestaltungen Gültigkeit hat. Die Messstrecke zur Erfassung von Kräften soll zumindest einem Umfang eines Schienenrades eines Elementes des rollenden Materials entsprechen, damit den unterschiedlichen Ausbildungen eines Schienenrades, wie beispielsweise Aufschweißungen, Flachstellen, Lunker u. dgl., Rechnung getragen werden kann.

Durch die Anordnung von Sensoren für eine Messgröße in Fahrtrichtung hintereinander wird sichergestellt, dass eine Erfassung von Messdaten etwa simultan erfolgen kann.

Werden die Signale jeweils von einem Analog-/Digitalwandler an zumindest eine Datenverarbeitungsanlage weitergeleitet und verarbeitet, so wird der Gleichzeitigkeit und damit der Gleichwertigkeit der Signale besonders einfach Rechnung getragen.

Werden zusätzliche Signale von Dehnmessstreifen in der Messstrecke, die an einem Schienenkopf der Schiene angeordnet sind, weitergeleitet, so kann auf vertikale, horizontale Kräfte und auf ein Torsionsmoment der Schiene rückgeschlossen werden.

Sind Signale von Sensoren für im Wesentlichen horizontale Kräfte, ausgeübt an der Schiene, vorgesehen, so kann ein besonders wichtiger Indikator für die Entgleisung eines Rades erhalten werden.

Werden die Kräfte der Schienenräder auf die Schiene und den Oberbau untereinander in einer Datenverarbeitungsanlage verglichen und bei einander widersprechenden Auswertungen diese Auswertungen gegebenenfalls überprüft und/oder ausgeschieden, so wird die Sicherheit der Auswertung wesentlich erhöht, da in der Auswertung zumindest zwei und gegebenenfalls mehrere redundante Messungen vorliegen.

Werden von den elektrischen Sensoren zumindest 10, insbesondere zumindest 100, Signale pro Sekunde an die zumindest eine Datenverarbeitungsanlage weitergegeben, so kann eine fast kontinuierliche Wiedergabe, Überprüfung und Verarbeitung der Signale für die Kräfte erfolgen, wodurch eine besonders hohe Sicherheit gewährleistet ist.

Wird eine Vielzahl von Abständen eines Spurkranzes des Schienenrades zu einer Achse des jeweiligen Schienenrades in der Messstrecke bestimmt und untereinander in einer Datenverarbeitungsanlage verglichen sowie gegebenenfalls bei Überschreiten eines Grenzwertes eine Anzeige durchgeführt, so kann eine besonders häufige Störstelle, u. zw. Unrundheit des Schienenrades, besonders einfach ermittelt und angezeigt werden.

Sind die elektrischen Sensoren, welche die Abstände des Spurkranzes von der Achse des Schienenrades bestimmen, oberhalb des Schienenkopfes angeordnet, so kann mit einfachen Mitteln besonders sicher der Radius an den jeweiligen Stellen ermittelt werden.

Werden die Signale der elektrischen Sensoren gleichzeitig abgegeben und gegebenenfalls gleichzeitig weitergeleitet, so ist eine rasche und sichere Beurteilung der Signale untereinander als auch für sich gewährleistet.

Werden die Signale der elektrischen Sensoren für ein bestimmtes Signal, z. B. Dehnung des Fußes der Schiene, Einsenkung der Schiene, Kräfte, der horizontalen und/oder vertikalen Bewegung mit einer Vielzahl von elektrischen Sensoren im Wesentlichen jeweils gleichzeitig über einen einzelnen dem jeweiligen Sensor zugeordneten Analog-/Digitalwandler abgegeben und die Signale an die zumindest eine Datenverarbeitungsanlage weitergeleitet und in dieser gespeichert und gegebenenfalls verarbeitet, so kann eine besonders rasche Ermittlung von Störstellen im rollenden Material durchgeführt werden, so dass eine Vermeidung von Störfällen besonders einfach möglich ist.

Werden in der Datenverarbeitungsanlage die digitalen Signale für die horizontalen und die vertikalen Kräfte, ausgeübt vom Element mit einem bestimmten Schienenrad und/oder bestimmten Achse, verknüpft, so kann besonders einfach ein Läufer, welcher entgleisen könnte, ermittelt werden. Lediglich durch die Verknüpfung der horizontalen und der vertikalen Kräfte kann eine tatsächliche Komponente zur möglichen Entgleisung tatsächlich ermittelt werden.

Werden in der Datenverarbeitungsanlage die jeweiligen digitalisierten Signale den Stellen der Messstrecke zugeordnet, so kann auf besonders einfach eine Ermittlung der Störstellen durchgeführt werden. So besteht die Möglichkeit nicht nur festzustellen, dass ein bestimmtes Schienenrad eine Fehlstelle aufweist, sondern auch die Fehlstellen am Umfang des Rades identifiziert werden.

Wird eine Kalibrierung der Signale in der Messstrecke bezüglich des Ortes der einzelnen Sensoren durchgeführt, so können Einflüsse, bedingt durch die einzelnen Orte der Sensoren, ausgeglichen werden, so dass Messdaten unabhängig von den Orten in der Messstrecke und damit auch der jeweiligen Sensoren erhalten werden können.

Werden in der Datenverarbeitungsanlage der Quotient der digitalisierten Signale für die horizontalen und vertikalen Kräfte der einzelnen Räder bestimmt und mit einem Grenzwert verglichen, so kann die Entgleisungswahrscheinlichkeit für ein Rad als auch die Verwindung eines Elementes besonders sicher ermittelt werden.

Wird die Summe der horizontalen Kräfte der Räder einer Achse ermittelt und bei Überschreiten eines Grenzwertes angezeigt, so kann die Belastung des Oberbaues besonders einfach und sicher ermittelt werden.

Wird der Mittelwert der Vertikalkräfte für jedes einzelne Schienenrad gebildet und mit einem Grenzwert verglichen, so kann die Belastung des Oberbaues und damit auch des Schotters, somit die potentielle Zerstörung derselben, ermittelt werden.

Werden elektrische Signale von einem elektrischen Kraftaufnehmer unterhalb der Schiene und/oder der Schwellen für horizontale und/oder vertikale Kräfte an die Datenverarbeitungsanlage weitergeleitet, so können die vertikalen Kräfte, die auf die Schienen bzw. die Schwellen einwirken, besonders genau erfasst werden, womit auch die Abnützung der Schienen als auch des Schotteroberbaues sehr genau ermittelt werden kann.

Werden elektrische Signale von elektrischen Sensoren für die Querverschiebung und/oder Höhenveränderung der Schiene und/oder Schwelle und/oder Tragplatte an die Datenverarbeitungsanlage weitergeleitet, so können neben der Auswertung für eine Wahrscheinlichkeit der Entgleisung auch Werte für die Abnützung von Gleisen erfasst werden.

Werden elektrische Signale einer Beschleunigung in vertikaler und/oder horizontaler Richtung der Schiene und/oder Schwelle an die Datenverarbeitungsanlage weitergeleitet, so kann eine besonders genaue Erfassung der dynamischen Beanspruchung von Schiene und Schwelle durchgeführt werden.

Im Folgenden wird die Erfindung anhand der Zeichnungen näher erläutert.
Es zeigen:
- Fig. 1: eine Messstrecke mit Triggern,
- Fig. 2: eine Schiene mit Dehnmessstreifen in Seitenansicht,
- Fig. 3: einen Ausschnitt aus der Messstrecke mit Sensoren zur Bestimmung von vertikalen und horizontalen Kräften,
- Fig. 4: die Anordnung von Sensoren für die Bestimmung von Querverschiebungen der Schiene und/oder Schwellen,
- Fig. 5: die Anordnung von Sensoren für die Bestimmung von Beschleunigungen der Schiene in Fahrtrichtung bzw. quer hierzu und
- Fig. 6: eine schematische Darstellung des elektrischen Schaltschemas.

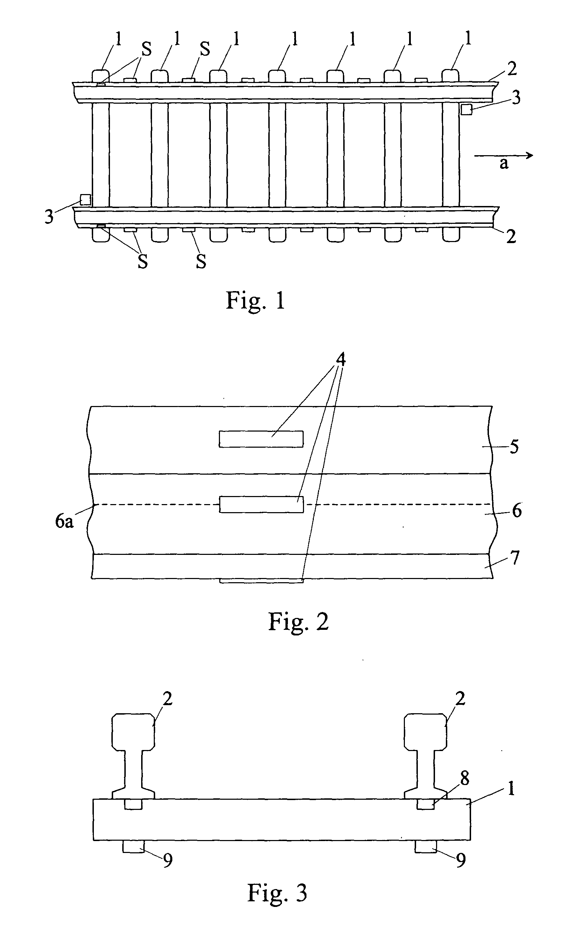

In Fig. 1 ist eine Messstrecke, die sich über sieben Schwellen 1 erstreckt, dargestellt, die mit zwei Schienen 2 eines schienengeleiteten Verkehrs verbunden sind. Zwischen den bei Belastungen elastisch verformten Schienen 2 und den Schwellen 1 können nicht dargestellte gummielastische Zwischenplatten, Winkelführungsplatten od. dgl. angeordnet sein. An den beiden Enden der Messstelle, die zumindest einer Länge des Umfanges eines größten Schienenrades entspricht, sind Trigger 3 angeordnet, die den Anfang und das Ende einer Messstrecke in Fahrtrichtung gemäß Pfeil a anzeigen. Die elektrischen Sensoren S sind nicht nur oberhalb der Schwellen 1 angeordnet, sondern auch in etwa mittig im Schwellenfach vorgesehen, je der zu ermittelnden Größe. Die reversible Dislozionen der Schienen weisen im Schwellenfach als auch die Kräfte und Beschleunigungen, ausgewirkt auf die Schienen, ein Maximum auf.

Alle Sensoren sind in Fahrtrichtung hintereinander angeordnet und geben zumindest 100 Signale pro Sekunde über die Analog-/Digitalwandler an die Datenverarbeitungsanlage ab. Die Abgabe der Signale erfolgt etwa simultan.

In Fig. 2 ist eine Schiene in Seitenansicht dargestellt, wobei Dehnmessstreifen 4 am Schienenkopf 5 in der neutralen Linie 6a des Schienensteges 6 als auch auf der Unterseite des Schienenfußes 7, und zwar jeweils in Fahrtrichtung hintereinander, angeordnet sind.

In Fig. 3 ist schematisch die Anordnung von Kraftaufnehmern dargestellt, wobei dieselben mit dem Bezugszeichen 8 versehen, unterhalb der Schiene 2, gegebenenfalls mit Zwischenschaltung von elastischen Zwischenplatten od. dgl. in der Schwelle 1 angeordnet sein können und/oder unterhalb der Schwelle 1 oder in einer Tragplatte angeordnet sein können, die das Bezugszeichen 9 tragen.

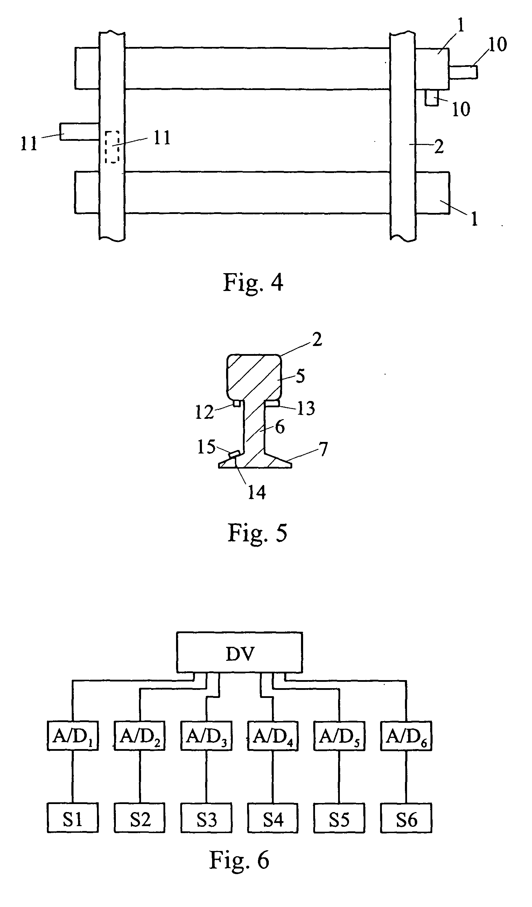

In Fig. 4 ist die Anordnung von Sensoren 10 und 11 für die Längs- bzw. Querverschiebung der Schwellen bzw. der Schiene dargestellt. Diese Sensoren stellen induktive Aufnehmer dar.

In Fig. 5 ist der Querschnitt einer Schiene 2 dargestellt, wobei auf der Unterseite des Schienenkopfes 5 Sensoren 12 für die Beschleunigung der Schiene in Fahrtrichtung a und quer zur Fahrtrichtung Sensoren 13 angeordnet sind. Am Schienenfuß und beidseits der neutralen Linie 14 des Schienenfußes erstrecken sich piezoelektrische Sensoren 15.

In Fig. 6 ist dargestellt, dass jeder einzelne Sensor S₁ bis S₆ über einen jeweils einzeln zugeordneten Analog-/Digitalwandler A/D₁ bis A/D₆ mit der Datenverarbeitungsanlage DV verbunden ist.

Die Ermittlung von bestimmten Größen, die für den Betrieb und insbesondere der Sicherheit von rollendem Material mit besonderer Bedeutung behaftet sind, kann lediglich aus komplexen Beziehungen ermittelt werden. Bislang wurden die Messergebnisse aus einer Messstrecke für sich betrachtet, wobei die Einflüsse außerhalb der Messstrecke nicht berücksichtigt wurden. Schienen, insbesondere wenn dieselben verschweißt sind, stellen einen Körper dar, der Schwingungen in horizontaler und vertikaler Richtung unterliegt. Weiters werden auch Kräfte außerhalb der Messstrecke, z. B. für Tragplatten und/oder Schotter, des Oberbaues in die Messstelle übertragen, so dass die Messstelle als solche zur Beurteilung nicht alleine herangezogen werden darf.

Die Einflüsse der einzelnen Größen sind vielfältig und werden über entsprechende Algorithmen in die Datenverarbeitungsanlage eingebracht. Jedenfalls muss die Anzahl der zu berechnenden Größen zumindest der Anzahl der zu ermittelnden physikalischen Größen entsprechen.

Im Folgenden werden die zu ermittelnden physikalischen Größen den entsprechenden Sensoren zugeordnet.
1. Längsverschiebung der Schienen induktive Sensoren 10, 11
2. Beschleunigung der Schienen in Schienenlängsrichtung piezoelektrische Sensoren 12
3. Beschleunigung der Schienen in Schienenquerrichtung piezoelektrische Sensoren 13
4. Vertikale/horizontale Belastung der Schiene Sensor Dehnmessstreifen 4
5. Vertikale/horizontale Belastung der Schwelle Sensor 11
   Durch Vereinfachungen der Beziehungen der ermittelten Größen untereinander kann z. B. der Quotient zwischen horizontalen und vertikalen Kräften, ausgeübt von einzelnen Rädern, gebildet werden, der wesentliche Rückschlüsse auf die Abnützung als auch auf die Sicherheit von Schienennetzen erlaubt.
6. Die Messung des Schienenraddurchmessers erfolgt direkt am rollenden Material, und die Werte werden funkübertragen. Es liegt ein induktiver Messaufnehmer vor.

Die von den Sensoren für bestimmte Messgrößen ermittelten Signale werden in der Datenverarbeitungsanlage ausgewertet und bei einander widersprechenden Ergebnissen erneut berechnet und gegebenenfalls ausgeschieden.

Es werden die Signale von allen elektrischen Sensoren für bestimmte Signale gleichzeitig abgegeben und gleichzeitig an die Datenverarbeitungsanlage weitergegeben. Eine Verknüpfung der Daten von den Sensoren erfolgt jeweils mit dem Ort der Sensoren in der Datenverarbeitungsanlage.

Die Werte aus den Sensoren sind von der örtlichen Gegebenheit abhängig, welchen durch eine Kalibrierung Rechnung getragen werden kann, wenn z. B. vorbestimmte Kräfte eingebracht und die Signale erfasst werden und sodann evaluiert werden.

In der Datenverarbeitungsanlage wird der Quotient zwischen horizontalen und vertikalen Kräften gebildet, aus welchem die Tendenz zur Entgleisung angezeigt werden kann.

Die Summe der Kräfte von Rädern in vertikaler und horizontaler Richtung werden ermittelt und damit die Abnützung des Gleises bzw. der Schienen festgelegt wird.

Mit Kraftaufnehmern unter den Schienen und/oder Schwellen bzw. Tragplatten werden horizontale oder vertikale Kräfte aufgenommen, die für die Belastung und Abnützung der Schiene und des Oberbaues für besondere Bedeutung sind.

Weiters werden über Sensoren 12, 13 die Beschleunigung in vertikaler und horizontaler Richtung ermittelt, um die Abnützung eines Gleises festlegen zu können.

## Patentansprüche

1. Verfahren zur Erfassung von Kräften für elastische Verformungen von zumindest einer Schiene eines schienengeleiteten Verkehrs, und einer, insbesondere reversiblen, Verformung eines Oberbaues, insbesondere mit Schwellen, Tragplatten od. dgl. mit Schotteroberbau und/oder schotterlosem Oberbau, in zumindest einer Messstrecke, deren Länge in Fahrtrichtung gesehen zumindest einem Umfang eines größten Schienenrades eines Elementes, z. B. Wagen, Triebelement od. dgl., entspricht, mit einer Vielzahl von elektrischen Sensoren, die für eine Messgröße in Fahrtrichtung gesehen hintereinander angeordnet sind, z. B. Dehnmessstreifen an einem Schienenfuß und einem Schienensteg der Schiene, welche elektrische Signale über zumindest einen Analog-/Digitalwandler an zumindest eine Datenverarbeitungsanlage übermitteln, in dieser gespeichert, verarbeitet, Kraftabweichungen und damit Formabweichungen von Schienenrädern, und von dieser die Überschreitung der Kräfte eines Grenzwertes angezeigt werden, **dadurch gekennzeichnet, dass** zusätzlich Signale von Dehnmessstreifen in der Messstrecke, die an einem Schienenkopf der Schiene, insbesondere entlang der Fahrtrichtung, angeordnet sind, über einen Analog-/Digitalwandler an die zumindest eine Datenverarbeitungsanlage weitergeleitet und verarbeitet werden, und Signale von Sensoren für im Wesentlichen horizontale Kräfte, ausgeübt an der Schiene, an die zumindest eine Datenverarbeitungsanlage über einen Analog-/Digitalwandler weitergeleitet und die Daten verarbeitet werden.

2. Verfahren nach Anspruch 1, **dadurch gekennzeichnet, dass** die Daten der Kräfte, ausgeübt von Schienenrädern auf die Schiene und/oder den Oberbau, untereinander in einer Datenverarbeitungsanlage verglichen werden, und bei einander widersprechenden Auswertungen diese Auswertungen gegebenenfalls überprüft und/oder ausgeschieden werden.

3. Verfahren nach Anspruch 1 oder 2, **dadurch gekennzeichnet, dass** von den elektrischen Sensoren zumindest 10, insbesondere zumindest 100, Signale pro Sekunde an die zumindest eine Datenverarbeitungsanlage weitergeleitet werden.

4. Verfahren nach Anspruch 1, 2 oder 3, **dadurch gekennzeichnet, dass** eine Vielzahl von Abständen eines Spurkranzes des Schienenrades zur Achse des jeweiligen Schienenrades in der Messstrecke bestimmt und untereinander in einer Datenverarbeitungsanlage verglichen sowie gegebenenfalls bei Überschreiten eines Grenzwertes eine Anzeige durchgeführt wird.

5. Verfahren nach Anspruch 4, **dadurch gekennzeichnet, dass** die Abstände über elektrische Sensoren bestimmt werden, welche oberhalb des Schienenkopfes angeordnet sind.

6. Verfahren nach einem der Ansprüche 1 bis 5, **dadurch gekennzeichnet, dass** die Signale der elektrischen Sensoren gleichzeitig abgegeben und gegebenenfalls gleichzeitig weitergeleitet werden.

7. Verfahren nach einem der Ansprüche 1 bis 6, **dadurch gekennzeichnet, dass** die Signale der elektrischen Sensoren für ein bestimmtes Signal, z. B. Dehnung des Fußes der Schiene, Einsenkung der Schiene, Kräfte der horizontalen und/oder vertikalen Bewegung mit einer Vielzahl von elektrischen Sensoren im Wesentlichen jeweils gleichzeitig über einen einzelnen, jedem Sensor zugeordneten Analog-/Digitalwandler an die zumindest eine Datenverarbeitungsanlage weitergeleitet und in dieser gespeichert und gegebenenfalls verarbeitet werden.

8. Verfahren nach einem der Ansprüche 1 bis 7, **dadurch gekennzeichnet, dass** in der Datenverarbeitungsanlage die digitalen Signale für die horizontalen Kräfte und/oder die vertikalen Kräfte, ausgeübt vom Element mit einem bestimmten Schienenrad und/oder bestimmten Achse, verknüpft werden.

9. Verfahren nach einem der Ansprüche 1 bis 8, **dadurch gekennzeichnet, dass** in der Datenverarbeitungsanlage die jeweiligen digitalisierten Signale den Stellen der Messstrecke zugeordnet werden.

10. Verfahren nach einem der Ansprüche 1 bis 9, **dadurch gekennzeichnet, dass** eine Kalibrierung der Signale in der Messstrecke bezüglich des Ortes der einzelnen Sensoren durchgeführt wird.

11. Verfahren nach einem der Ansprüche 1 bis 10, **dadurch gekennzeichnet, dass** in der Datenverarbeitungsanlage der Quotient der digitalisierten Signale für die horizontalen und/oder vertikalen Kräfte der einzelnen Räder bestimmt und mit einem Grenzwert verglichen wird.

12. Verfahren nach einem der Ansprüche 1 bis 11, **dadurch gekennzeichnet, dass** die Summe der horizontalen Kräfte der Räder einer Achse ermittelt und bei Überschreiten eines Grenzwertes angezeigt wird.

13. Verfahren nach einem der Ansprüche 1 bis 12, **dadurch gekennzeichnet, dass** der Mittelwert der Vertikalkräfte in der Messstrecke jedes einzelnen Schienenrades gebildet und mit einem Grenzwert verglichen wird.

14. Verfahren nach einem der Ansprüche 1 bis 13, **dadurch gekennzeichnet, dass** elektrische Signale von einem elektrischen Kraftaufnehmer unterhalb der Schienen und/oder der Schwellen für horizontale und/oder vertikale Kräfte an die Datenverarbeitungsanlage weitergeleitet werden.

15. Verfahren nach einem der Ansprüche 1 bis 14, **dadurch gekennzeichnet, dass** elektrische Signale von elektrischen Sensoren für die Querverschiebung und/oder Höhenverschiebung der Schiene und/oder Schwelle und/oder Tragplatte an die Datenverarbeitungsanlage weitergeleitet werden.

16. Verfahren nach einem der Ansprüche 1 bis 15, **dadurch gekennzeichnet, dass** elektrische Signale einer Beschleunigung in vertikaler und/oder horizontaler Richtung der Schiene und/oder in Schwelle an die Datenverarbeitungsanlage weitergeleitet werden.
